(19)

Europäisches
Patentamt
European
Patent Office
Office européen
des brevets

(11) **EP 4 586 714 A1**

(12) **EUROPEAN PATENT APPLICATION**
published in accordance with Art. 153(4) EPC

(43) Date of publication:
**16.07.2025 Bulletin 2025/29**

(21) Application number: **22954580.1**

(22) Date of filing: **12.08.2022**

(51) International Patent Classification (IPC):
*H04W 72/04* (2023.01)

(52) Cooperative Patent Classification (CPC):
**H04W 72/04**

(86) International application number:
**PCT/CN2022/112067**

(87) International publication number:
**WO 2024/031620 (15.02.2024 Gazette 2024/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
- **LIN, Yanan
  Dongguan, Guangdong 523860 (CN)**
- **XU, Jing
  Dongguan, Guangdong 523860 (CN)**
- **ZHANG, Yi
  Dongguan, Guangdong 523860 (CN)**
- **LIANG, Bin
  Dongguan, Guangdong 523860 (CN)**

(74) Representative: **Aldridge, Henry Alexander et al
Venner Shipley LLP
200 Aldersgate
London EC1A 4HD (GB)**

(54) **INFORMATION DETERMINATION METHOD AND APPARATUS, AND COMMUNICATION DEVICE**

(57)    Provided in the embodiments of the present application are an information determination method and apparatus, and a communication device. The method comprises: on the basis of the resource number of first partial resources, a first device determining a transport block size (TBS) corresponding to a first channel, a transport resource pre-configured for transmitting the first channel being a first transport resource, the first transport resource comprising the first partial resources and second partial resources, and the second partial resources being not used for transmitting the first channel.

A first device determines a TBS corresponding to a first channel based on a number of resources of a first part of resources, where a transmission resource for transmitting the first channel is pre-configured as a first transmission resource, the first transmission resource includes the first part of resources and a second part of resources, and the second part of resources is not used for transmitting the first channel

401

**FIG. 4**

EP 4 586 714 A1

**Description**

TECHNICAL FIELD

Embodiments of the present disclosure relate to the technical field of mobile communications, and in particular to, a method and a device for determining information, and a communication device.

BACKGROUND

A Transport Block Size (TBS) corresponding to a channel is determined based on the number of resources of transmission resources for the channel. For a semi-statically configured channel, the channel is periodically transmitted, and the number of resources of transmission resources for each of the periodically transmitted channels is the same with each other. That is to say, the TBS for each of the periodically transmitted channels is the same with each other. However, there may be differences between different channels that are transmitted periodically, for example, available resources for transmission of the different channels are different. The current method for determining the TBS of a channel does not consider the differences between the channels, which results in the determined TBS being inaccurate.

SUMMARY

Embodiments of the present disclosure provide a method and a device for determining information, a communication device, a chip, a computer readable storage medium, a computer program product, and a computer program.

The method for determining information provided by the embodiments of the present disclosure includes the following operation.

A first device determines a Transport Block Size (TBS) corresponding to a first channel based on a number of resources of a first part of resources.

Herein, a transmission resource for transmitting the first channel is pre-configured as a first transmission resource, the first transmission resource includes the first part of resources and a second part of resources, and the second part of resources is not used for transmitting the first channel.

The device for determining information provided by the embodiments of the present disclosure is applied to a first device, and the device includes a determining unit.

The determining unit is configured to determine a TBS corresponding to a first channel based on a number of resources of a first part of resources.

Herein, a transmission resource for transmitting the first channel is pre-configured as a first transmission resource, the first transmission resource includes the first part of resources and a second part of resources, and the second part of resources is not used for transmitting the first channel.

The communication device provided by the embodiments of the present disclosure includes a processor and a memory. The memory is configured to store a computer program, and the processor is configured to invoke and execute the computer program stored in the memory to perform the above-described method for determining information.

The chip provided by the embodiments of the present disclosure is configured to implement the above-described method for determining information.

Specifically, the chip includes a processor configured to invoke and execute a computer program from a memory, to enable a device on which the chip is mounted to perform the above-described method for determining information.

The computer readable storage medium provided by the embodiments of the present disclosure is configured to store a computer program that causes a computer to perform the above-described method for determining information.

The computer program product provided by the embodiments of the present disclosure includes computer program instructions that cause a computer to perform the above-described method for determining information.

The computer program provided by the embodiment of the present disclosure, when running on a computer, causes the computer to execute the above-described method for determining information.

In the technical scheme of the embodiments of the present disclosure, for a first channel, the transmission resource used for transmitting the first channel is the pre-configured first transmission resource, the first transmission resource includes the first part of resources and the second part of resources, and the second part of resources is not used for transmitting the first channel. In this case, the first device determines the TBS corresponding to the first channel based on the number of resources of the first part of resources. It can be seen that when the TBS corresponding to the first channel is determined, the first device relies on the number of resources of the first part of resources in the first transmission resource for the first channel (which may be understood as the number of resources of the available part of resources in the first transmission resource). This method of determining the TBS flexibly adapts to the available resources for the channel and has more accuracy.

BRIEF DESCRIPTION OF THE DRAWINGS

The drawings described herein are adopted to provide a further understanding to the present disclosure and form a part of the present disclosure. Schematic embodiments of the present disclosure and descriptions thereof are adopted to explain the present disclosure and not intended to form improper limits to the present disclosure. In the drawings:

[FIG. 1 is a schematic diagram of an architecture of a communication system according to an embodiment of the present disclosure.

FIG. 2 is an diagram of adaptation between an EXtended Reality (XR) service period and an Semi-Persistent Scheduling (SPS)/Configured Grant (CG) transmission period;

FIG. 3 is a schematic diagram of SPS/CG transmission positions in five SPS/CG configurations;

FIG. 4 is a flowchart of a method for determining information according to an embodiment of the present disclosure;

FIG. 5 is a first schematic diagram of a transmission resource occupied by SPS Physical Downlink Shared Channel (PDSCH) according to an embodiment of the present disclosure.

FIG. 6 is a second schematic diagram of a transmission resource occupied by SPS PDSCH according to an embodiment of the present disclosure.

FIG. 7 is a third schematic diagram of a transmission resource occupied by SPS PDSCH according to an embodiment of the present disclosure.

FIG. 8 is a schematic structural diagram of a device for determining information according to the embodiment of the present disclosure.

FIG. 9 is a schematic structural diagram of a communication device according to an embodiment of the present disclosure.

FIG. 10 is a schematic structural diagram of a chip according to an embodiment of the present disclosure.

DETAILED DESCRIPTION

The technical schemes of the embodiments of the present disclosure would be clearly and completely described in conjunction with the accompanying drawings in the embodiments of the present disclosure. It is apparent that the described embodiments are only part of the embodiments of the present disclosure, not all the embodiments. All other embodiments obtained by those of ordinary skill in the art with respect to the embodiments of the present disclosure without creative efforts all fall within the scope of protection of the present disclosure.

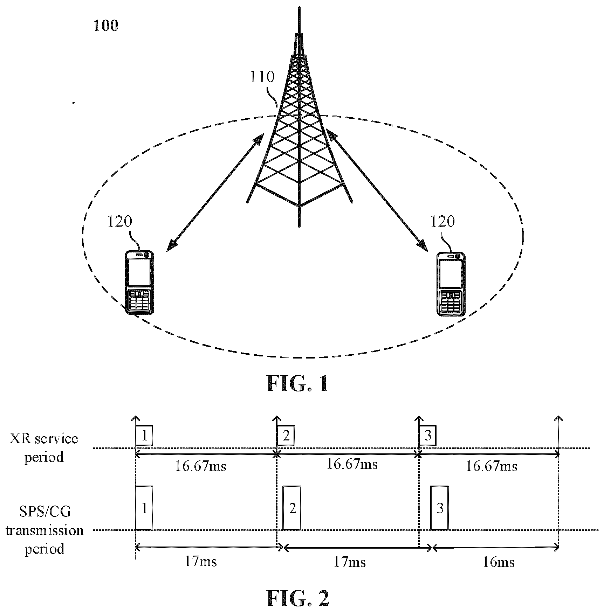

FIG. 1 is a schematic diagram of an architecture of a communication system according to an embodiment of the present disclosure. As shown in FIG. 1, the communication system 100 may include a network device 110 that communicates with terminal devices 120 (or referred to as communication terminals, or terminals). The network device 110 may provide communication coverage for a particular geographic area and may communicate with terminal devices located within the coverage.

FIG. 1 exemplarily illustrates one network device and two terminal devices. In some implementations of the present disclosure, the communication system 100 may include multiple network devices, and other numbers of terminal devices may be included within the coverage of each network device, which is not limited by the embodiments of the present disclosure

The network device in FIG. 1 may be any access network node. For example, the network device may refer to a base station, a satellite having base station functions, or the like.

The terminal device in FIG. 1 may be any terminal device. For example, the terminal device may be an access terminal, a UE, a subscriber unit, a subscriber station, a mobile station, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device having a wireless communication function, a computing device or other processing device connected to a wireless modem, a vehicle-mounted device, a wearable device, a terminal device in a 5G network or a terminal device in a future evolution network, etc.

It should be noted that FIG. 1 only illustrates by way of example the system to which the present disclosure is applied, and of course the method shown in the embodiment of the present disclosure may also be applied to other systems. In addition, the terms "system" and "network" herein are often used interchangeably herein. In this disclosure, the term "and/or" is only to describe an association relationship between associated objects and represents that three kinds of relationships may exist. For example, A and/or B may represent three conditions: i.e., independent existence of A, existence of both A and B and independent existence of B. In addition, the character "/" in the present disclosure generally indicates that the associated objects before and after this character is in an "or" relationship. It should be understood that the reference to "indication" in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B. It should also be understood that the term "correspondence" may mean that there is a direct correspondence or an indirect correspondence between the two, may also mean that there is an association relationship between the two, and may also be a relationship between indication and being indicated, configuration and being configured, etc. It should also be understood that "predefined" or "predefined rules" may be achieved by pre-storing corresponding codes, tables or other means used for indicating relevant information in devices (e.g., including terminal devices and network devices), and the present disclosure is not limited to the specific implementation thereof. For example, predefined may refer to what is defined in the protocol. It should also be understood that, in the embodiments of the present disclosure, the "protocol" may be a standard protocol in the communication field. For example, the protocol may include an LTE protocol, a New Radio (NR) protocol, and related protocols applied in future communication systems, which are not limited in the present disclosure.

In order to facilitate understanding of the technical schemes of the embodiments of the present disclosure, the technical technologies related to the embodiments of the present disclosure are described below, and the following related technologies, as optional schemes, can be arbitrarily combined with the technical schemes of the embodiments of the present disclosure, all of which belong to the protection scope of the embodiments of the present disclosure.

**SPS PDSCH**

The Physical Downlink Shared Channel (PDSCH) may be semi-statically transmitted, and the semi-statically transmitted PDSCH is Semi-Persistent Scheduling (SPS) PDSCH. For the SPS PDSCHs, after the network side pre-configures transmission resources through Radio Resource Control (RRC) signaling and activates the transmission resources through Downlink Control Information (DCI) signaling, the terminal device may periodically transmit the SPS PDSCHs on the pre-configured transmission resources, and each SPS PDSCH occupies the same number of transmission resources. The parameters configured when the transmission resources are pre-configured through the RRC signaling include, but are not limited to, at least one of: Configured Scheduling- Radio Network Temporary Identity (CS-RNTI), *periodicity,* a number of Hybrid Automatic Repeat reQuest (HARQ) processes (*nrofHARQ-Processes*), or HARQ process Identity offset (*harq-ProcID-Offset*). After the network side pre-configures and activates the transmission resources, a slot where the periodic transmission resources (i.e., the SPS PDSCH resources) appear is determined based on a following formula:

(*numberOfSlotsPerFrame* $\times$ SFN + slot number in the frame) = [(*numberOfSlotsPerFrame* $\times$ SFN$_{start\ time}$ + slot-$_{start\ time}$) + N $\times$ *periodicity* $\times$ *numberOfSlotsPerFrame* / *10*] modulo (1024 $\times$ *numberOfSlotsPerFrame*),

where, the *numberOfSlotsPerFrame* represents the number of slots included in one radio frame, the SFN represents the radio frame number, the slot number in the frame represents a slot number of a slot where the SPS PDSCH resource appears in one radio frame, the SFN$_{start time}$ and slot$_{start time}$ represent a frame number of a frame and a slot number of a slot where the first one of the SPS PDSCHs appears after the transmission resources are activated, and the *periodicity* represents a period. The slot number of the slot where the first one of the SPS PDSCHs appears is indicated by DCI signaling (where the DCI signaling is used for activating the transmission resources), and the slots where subsequent SPS PDSCHs appear periodically are determined by the above formula.

In some implementations, optional periods for SPS PDSCH transmission include {10, 20, 32, 40, 64, 80...} ms, and these periods mainly support Voice over IP (VoIP) services. In some implementations, in order to support the Ultra-Reliable and Low-Latency Communications (URLLC) services, the minimum supported period for SPS PDSCH transmission is one slot. For example, optional periods supported by 15 kHz include {1... 640} slots, optional periods supported by 30 kHz include {1... 1280} slots, optional periods supported by 60 kHz include {1... 2560} slots, and optional period supported by 120 kHz include {1... 5120} slots.

**CG PUSCH**

The Physical Uplink Shared Channel (PUSCH) may be semi-statically transmitted, and the semi-statically transmitted PUSCH is Configured Grant (CG) PUSCH. The CG PUSCH includes two types: type-1 CG PUSCH and type-2 CG PUSCH.

For the type-1 CG PUSCH, after the network side pre-configures transmission resources through the RRC signaling, the transmission resources becomes valid immediately without the activation by DCI.

For the type-2 CG PUSCH, after the network side pre-configures transmission resources through the RRC signaling, the transmission resources becomes valid only after being activated by DCI. The operation manner of the type-2 CG PUSCH is basically identical to the operation manner of the SPS PDSCH, and may be referred to the above description of the SPS PDSCH.

In some implementations, the periods for the CG PUSCH transmission support {2, 7} symbols and {1, 2, 4, 5, 8, 10, 16, 20, 32, 40...} slots.

## NR frame structure

A frame length of 10 ms is adopted in the NR, and one frame includes 10 subframes. A half frame is composed of 5 subframes, where the subframes numbered 0 to 4 and the subframes numbered 5 to 9 are respectively in different half frames.

The NR frame structure has a unit of slots, and slots in a basic frame structure may be classified into three categories: uplink slots, downlink slots, and flexible slots. In the case of normal Cyclic Prefix (CP), each slot includes 14 symbols. In the case of extended CP, each slot includes 12 symbols. The symbols in each slot may be classified into three categories: downlink symbols, uplink symbols, and flexible symbols. According to the actual scheduling of the base station, the flexible symbols may be used for transmitting downlink data or uplink data, i.e., the transmission direction of the symbols is not fixed.

The configuration of the NR frame structure is implemented by adopting a flexible combination of a semi-static configuration through RRC signaling and a dynamic configuration through DCI signaling. The semi-static configuration through RRC signaling supports two manners: a semi-static configuration through cell-specific RRC signaling and a semi-static configuration through UE-specific RRC signaling. The dynamic configuration through DCI signaling supports two manners: a configuration of direct indication by Slot Format Indication (SFI) and a configuration determined by DCI scheduling. For the semi-static configuration of NR frame structure, the system configures the frame structure based on a period (where the period may be understood as an uplink and downlink transmission period, or a Time Division Duplex (TDD) uplink and downlink switching period), and there is only one switching point from downlink to uplink resources in each period, so as to ensure that the downlink resources are contiguous and the uplink resources are contiguous in each period. In some implementations, the period of the frame structure may be 0.5 ms, 0.625 ms, 1 ms, 1.25 ms, 2 ms, 2.5 ms, 5 ms, or 10 ms.

## XR

In the research project of EXtended Reality (XR), the scenarios studied include Augmented Reality (AR), Virtual Reality (VR), Mixed Reality (MR), Cloud Gaming (CG), etc. One of the main services of XR is the video stream service. An arrival rate (measured in fps, i.e., the number of frames per second) of the video stream may be 30 fps, 60 fps, 90 fps, or 120 fps. Then the corresponding period of the video stream is 33.33 ms, 16.67 ms, 11.11 ms, or 8.33 ms, respectively.

## TBS

The size of the transport block (i.e., TBS) carried by the PDSCH is determined as follows.

1. The number $N_{RE}$ of Resource Elements (RE) included in a transmission resource for the PDSCH is determined.

1-1) The number of REs corresponding to one Physical Resource Block (PRB) in the transmission resource for the PDSCH is determined as:

$$N_{RE}^{'} = N_{sc}^{RB} \cdot N_{symb}^{sh} - N_{DMRS}^{PRB} - N_{oh}^{PRB} ,$$

where, $N_{sc}^{RB} = 12$, representing the number of subcarriers corresponding to one Resource Block (RB); $N_{symb}^{sh}$ represents the number of time-domain symbols included in the transmission resource for the PDSCH; $N_{DMRS}^{PRB}$ represents the number of REs included in the demodulation reference signal; $N_{oh}^{PRB}$ is a parameter configured through high-level signaling and has a value of 6, 12, or 18 (if this parameter is not configured in the high-level signaling, it is set to be 0).

1-2) The number of REs included in the transmission resource for the PDSCH is determined as:

$$N_{RE} = \min\left(156, N_{RE}^{'}\right) \cdot n_{PRB} ,$$

where, $n_{PRB}$ represents the number of PRBs included in the transmission resource for the PDSCH.

2. $N_{info}$ is calculated as $N_{info} = N_{RE} \cdot R \cdot Q_m \cdot \upsilon$, and the TBS is determined according to $N_{info}$.

Herein, $R$ represents the coding rate, $Q_m$ represents the modulation order, and $\upsilon$ represents the number of transport layers.

Herein, the determination of the TBS according to $N_{info}$ may be implemented through following steps 2-1) to 2-7).

In step 2-1), it is determined whether $N_{info}$ is less than or equal to 3824. If $N_{info}$ is less than or equal to 3824, the step 2-2) is performed; and if $N_{info}$ is greater than 3824, the step 2-3) is performed.

In step 2-2), $N'_{info}$ is calculated as: $N'_{info} = \max\left( 24, 2^n * \left\lfloor \dfrac{N_{info}}{2^n} \right\rfloor \right)$, where $n = \max\left( 3, \left\lfloor \log_2\left( N_{info} \right) - 6 \right\rfloor \right)$, and the TBS is determined according to $N'_{info}$ and a configuration table.

In step 2-3), $N'_{info}$ is calculated as: $N'_{info} = 2^n \times round\left( \dfrac{N_{info} - 24}{2^n} \right)$, where $n = \left\lfloor \log_2\left( N_{info} - 24 \right) - 5 \right\rfloor$. Then, it is determined whether $R$ is less than or equal to 1/4. If $R$ is less than or equal to 1/4, step 2-4) is performed; and if $R$ is greater than 1/4, step 2-5) is performed.

In step 2-4), the TBS is calculated as: $TBS = 8 * C * \left\lceil \dfrac{N'_{info} + 24}{8 * C} \right\rceil - 24$, where

$$C = \left\lceil \dfrac{N'_{info} + 24}{3816} \right\rceil.$$

In step 2-5), it is determined whether $N'_{info}$ is greater than or equal to 8424. If $N'_{info}$ is greater than or equal to 8424, step 2-6) is performed; and if $N'_{info}$ is less than 8424, step 2-7) is performed.

In step 2-6), the TBS is calculated as: $TBS = 8 * C * \left\lceil \dfrac{N'_{info} + 24}{8 * C} \right\rceil - 24$, where

$$C = \left\lceil \dfrac{N'_{info} + 24}{8424} \right\rceil.$$

In step 2-7), the TBS is calculated as: $TBS = 8 * \left\lceil \dfrac{N'_{info} + 24}{8} \right\rceil - 24$.

The calculation manner of the TBS corresponding to PUSCH is the same as the above calculation manner of the TBS corresponding to the PDSCH. The TBS corresponding to the PUSCH may be calculated with reference to the calculation manner of the TBS corresponding to the PDSCH.

As can be seen from the above description, the TBS corresponding to a channel is determined based on the number of resources (i.e., the number of REs) of the transmission resources for the channel. For a semi-static configured channel, the channel is periodically transmitted, and the number of resources of transmission resources for each of the periodically transmitted channels is the same with each other. That is to say, the TBS for each of the periodically transmitted channels is the same with each other. However, there may be differences between different channels that are transmitted periodically, for example, available resources for transmission of the different channels are different. The current method for determining the TBS of a channel does not consider the differences between the channels, which results in the lack of flexibility of the TBS of the channel.

Taking the XR service as an example, the XR service exhibits periodic characteristics, and thus the XR service is transmitted by using the SPS PDSCH or the CG PUSCH, which will help reduce service transmission delay (because it is not required to wait for the DCI for scheduling services) and reduce the power consumption of the terminal device (because it is not required to detect the DCI for scheduling services). The optional periods of the XR service include {33.33 ms, 16.67 ms, 11.11 ms, 8.33 ms}, and the lengths of the slot supported in the NR system include 1 ms, 0.5 ms, 0.25 ms, and 0.125 ms.

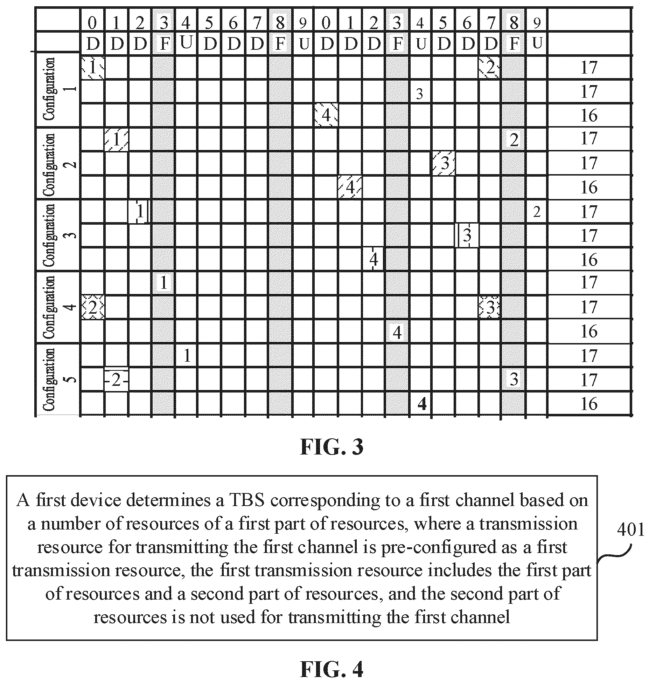

It may be found that the length of the XR service period cannot be matched with the length of the NR slot by an integer multiple, and thus, the transmission period of the SPS PDSCH or the CG PUSCH (referred to as the SPS/CG transmission period for short) cannot be matched with the XR service period by an integer multiple. In view of this, a solution is proposed, where the XR service period is 16.67 ms, and the SPS/CG transmission period may be repeated in the manner of {17ms, 17ms, 16ms}, which matches with three XR service periods of 16.67 ms to the maximum extent, as shown in FIG. 2. Using the manner shown in FIG. 2 to transmit the XR service has a following problem: according to the frame structure and the SPS/CG transmission period, the time-domain position (such as slot and sub-slot) where the SPS PDSCH or CG PUSCH (referred to as SPS/CG for short) transmission is performed may belong to a flexible slot. As shown in FIG. 3, the TDD uplink and downlink switching period is 5 ms, and the uplink and downlink configuration of the NR frame structure is {D, D, D, F, U}, where D represents the downlink slot, F represents the flexible slot, and U represents the uplink slot. FIG. 3 shows five SPS/CG configurations. Taking the first SPS/CG configuration as an example, the first SPS/CG transmission is located in slot 0 of the first radio frame, the second SPS/CG transmission is located in slot 7 of the second radio frame, and the third SPS/CG transmission is located in slot 0 of the third radio frame. The periods of these three SPS/CG transmissions are {17ms, 17ms, 16ms}, respectively. The other SPS/CG configurations are different from the first SPS/CG configuration in that a starting position of the first SPS/CG transmission in other SPS/CG configurations is different from and has a certain offset compared with the starting position of the first SPS/CG transmission in the first SPS/CG configuration. As can be seen from FIG. 3, there are three SPS/CG configurations (i.e., the second, fourth, and fifth SPS/CG configurations) where the SPS/CG is transmitted in the flexible slot. In the NR system, when the transmission position of the SPS/CG is the flexible slot, if there is no uplink/downlink conflict between the time-domain symbols occupied by the SPS/CG in the flexible slot (for example, for the SPS PDSCH, its occupied time-domain symbols are downlink symbols and/or flexible symbols), then the SPS/CG is normally transmitted; and if there is uplink/downlink conflict between the time-domain symbols occupied by the SPS/CG in the flexible slot (for example, for the SPS PDSCH, its occupied time-domain symbols include the uplink symbols), then the transmission of the SPS/CG is abandoned. If the non-conflicting time-domain symbols in a flexible slot (i.e., the downlink symbols and flexible symbols for the SPS PDSCH, and the uplink symbols and flexible symbols for the CG PUSCH) are used as transmission resources for the XR service, the problem of insufficient utilization of transmission resources in other slots (i.e., inflexible slots) will be caused. For example, if the SPS PDSCH is configured to occupy 8 symbols in the flexible slot according to the non-conflicting time-domain symbols, this leads to 14 - 8 = 6 symbols not being used in other downlink slot. It may be seen that if it is required to make full use of transmission resources, the SPS/CG, whether being transmitted on the inflexible slot or the flexible slot, shall occupy the maximum number of transmission resources in a slot. However, the available resources for the SPS/CG transmission on the inflexible slot are different from the available resources for the SPS/CG transmission on the flexible slot. If the TBS corresponding to the SPS/CG is determined in the current manner, an inaccuracy problem will be caused, causing the transmission of the SPS/CG to be abandoned. Therefore, the following technical solutions according to the embodiments of the present disclosure are proposed

In order to facilitate understanding of the technical schemes of the embodiments of the present disclosure, the technical schemes of the present disclosure will be described in detail below with reference to specific embodiments. The above related technologies, as optional schemes, can be arbitrarily combined with the technical schemes of the embodiments of the present disclosure, all of which belong to the protection scope of the embodiments of the present disclosure. The embodiments of the present disclosure include at least part of following contents.

FIG. 4 is a flowchart of a method for determining information according to an embodiment of the present disclosure. As shown in FIG. 4, the method for determining information includes operation 401.

In operation 401, a first device determines a TBS corresponding to a first channel based on a number of resources of a first part of resources, where a transmission resource for transmitting the first channel is pre-configured as a first transmission resource, the first transmission resource includes the first part of resources and a second part of resources, and the second part of resources is not used for transmitting the first channel.

In the embodiment of the present disclosure, the first channel is used for transmitting service data. The first device may be a receiver that receives the service data (i.e., a receiver that receives the first channel) or a transmitter that sends the service data (i.e., a transmitter that sends the first channel). In some implementations, the first device is a terminal device. In other implementations, the first device is a network device.

In the embodiment of the present disclosure, the TBS corresponding to the first channel refers to the size of a transport block carried by the first channel.

In the embodiment of the present disclosure, the transmission resource for the first channel is a first transmission resource pre-configured by the base station. In some implementations, the first channel is SPS PDSCH. In other implementations, the first channel is CG PUSCH. Herein, the SPS PDSCH and the CG PUSCH may be understood with reference to the foregoing related description.

In the embodiment of the present disclosure, the first transmission resource for the first channel includes a first part of resources and a second part of resources, and the second part of resources is not used for transmitting the first channel. The first part of resources may be a part of resources in the first transmission resource excluding the second part of resources. The first part of resources is used for transmitting the first channel.

Herein, the first part of resources may also be understood as available resources in the first transmission resource, i.e., resources used for transmitting the first channel; and the second part of resources may also be understood as unavailable resources in the first transmission resource, i.e., resources that cannot be used for transmitting the first channel.

It is to be noted that the "transmission resource" or the "resource" described in the embodiments of the present disclosure may include at least one of: time-domain symbols (which may also be referred to as symbols for short), PRBs, or REs.

In some implementations, the first channel is downlink channel, such as the SPS PDSCH. The second part of resources includes at least one of: an uplink transmission resource, a guard gap-occupied resource, a control resource set-occupied resource, a synchronization signal-occupied resource, a broadcast channel-occupied resource, and a first pre-configured resource. The first pre-configured resource is a pre-configured resource that cannot be occupied by the downlink channel.

Herein, the uplink transmission resource may include at least one of: uplink symbols, uplink PRBs, or uplink REs.

Herein, the guard gap-occupied resource may include at least one of following resources: a time-domain guard gap and a frequency-domain guard gap. The time-domain guard gap is used for avoiding interference between uplink and downlink transmissions, and its length may be, but is not limited to, the symbol level. The frequency-domain guard gap is used for avoiding interference between frequency bands, and its length may be, but is not limited to, the PRB level.

Herein, the first pre-configured resource may be a resource, pre-configured by the base station, that cannot be occupied by the downlink channel.

In some implementations, the first channel is uplink channel, such as the CG PUSCH. The second part of resources includes at least one of: a downlink transmission resource, a guard gap-occupied resource, a control resource set-occupied resource, a synchronization signal-occupied resource, a broadcast channel-occupied resource, and a second pre-configured resource. The second pre-configured resource is a pre-configured resource that cannot be occupied by the uplink channel.

Herein, the downlink transmission resource may include at least one of: downlink symbols, downlink PRBs, or downlink REs.

Herein, the guard gap-occupied resource may include at least one of following resources: a time-domain guard gap and a frequency-domain guard gap. The time-domain guard gap is used for avoiding interference between uplink and downlink transmissions, and its length may be, but is not limited to, the symbol level. The frequency-domain guard gap is used for avoiding interference between frequency bands, and its length may be, but is not limited to, the PRB level.

Herein, the second pre-configured resource may be a resource, pre-configured by the base station, that cannot be occupied by the uplink channel.

When the base station pre-configures the resource that cannot be occupied by the downlink channel and the resource that cannot be occupied by the uplink channel, the resource that cannot be occupied by the downlink channel may be independently configured from the resource that cannot be occupied by the uplink channel.

In the embodiment of the present disclosure, the first part of resources is a part of resources in the first transmission resource other than the second part of resources. Considering that the second part of resources has different distributions in the first transmission resource, the first part of resources may be contiguous resources or non-contiguous resources.

In some implementations, the first part of resources are contiguous resources. In this case, the first channel may be transmitted by using all resources of the first part of resources, and accordingly, the first device determines the TBS corresponding to the first channel based on a number of resources of the all resources of the first part of resources.

In some implementations, the first part of resources are non-contiguous resources, specifically, the first part of resources includes multiple non-contiguous groups of resources, and resources within each group of resources are contiguous. In this case, in option 1), the first channel may be transmitted by using all resources of the first part of resources, and accordingly, the first device determines the TBS corresponding to the first channel based on a number of resources of the all resources of the first part of resources; and in option 2), the first channel may be transmitted by using one group of resources of the first part of resources, and accordingly, the first device determines the TBS corresponding to the first channel based on a number of resources of the one group of resources among multiple groups of resources. Herein, the number of resources of the one group of resources among the multiple groups of resources may be determined, but is not limited to, through the following manners:

the one group of resources among the multiple groups of resources is a group of resources having a largest number of resources among the multiple groups of resources, or
the one group of resources among the multiple groups of resources is a group of resources having a smallest resource numbering among the multiple groups of resources, or
the one group of resources among the multiple groups of resources is a group of resources having a largest resource numbering among the multiple groups of resources, or

the one group of resources among the multiple groups of resources is a temporally earliest group of resources among the multiple groups of resources, or

the one group of resources among the multiple groups of resources is a temporally latest group of resources among the multiple groups of resources.

Herein, the one group of resources among the multiple groups of resources is a group of resources having a largest number of resources among the multiple groups of resources, which can ensure that the first channel can be transmitted by using the group of resources having the largest number of resources in the first part of resources, thereby improving resource utilization.

Herein, the one group of resources among the multiple groups of resources is a group of resources having a smallest resource numbering among the multiple groups of resources, which can ensure that the first channel can be transmitted by using the group of resources having the smallest resource number in the first part of resources, thereby reducing the transmission delay. The group of resources having the smallest resource numbering among the multiple groups of resources may be the first group of resources among the multiple groups of resources.

Herein, the one group of resources among the multiple groups of resources is a temporally earliest group of resources among the multiple groups of resources, which can ensure that the first channel can be transmitted by using the temporally earliest group of resources in the first part of resources, thereby reducing the transmission delay. The temporally earliest group of resources among the multiple groups of resources may be the first group of resources among the multiple groups of resources. Each of the multiple groups of resources follows a chronological order, and the timing reference for one group of resources may be determined based on a time of a certain resource (e.g., the first one resource) in the group of resources.

In the embodiment of the present disclosure, the operation that the first device determines the TBS corresponding to the first channel based on the number of resources of the first part of resources includes that:

the first device determines the number of resources of the first part of resources; and

the first device determines the TBS corresponding to the first channel based on the number of resources of the first part of resources.

In the embodiment of the present disclosure, the operation that the first device determines the number of resources of the first part of resources may be implemented through the following first scheme and second scheme.

**The first scheme**

In the embodiment of the present disclosure, the first transmission resource includes a number of N1 time-domain symbols and a number of N2 PRBs, and the second part of resources includes a number of M1 time-domain symbols among the N1 time-domain symbols and a number of M2 PRBs among the N2 PRBs, where N1 and N2 are positive integers. M1 is a positive integer less than N1, and M2 is a positive integer less than or equal to N2; or M1 is a positive integer less than or equal to N1, and M2 is a positive integer less than N2.

Scheme A)

In some implementations, the first device determines the number of resources of the first part of resources based on a number of time-domain symbols included in the first transmission resource, a number of PRBs included in the first transmission resource, and a number of time-domain symbols included in the second part of resources.

Specifically, the first device determines a number of Resource Elements (RE) corresponding to one PRB in the first part of resources based on the number of the time-domain symbols included in the first transmission resource and the number of the time-domain symbols included in the second part of resources; and the first device determines a number of REs of the first part of resources based on the number of the PRBs included in the first transmission resource and the number of the REs corresponding to one PRB in the first part of resources.

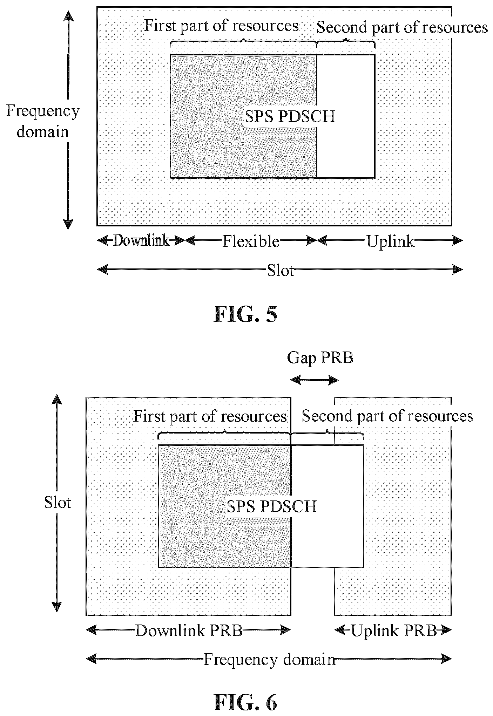

In an example, as shown in FIG. 5, the first channel is SPS PDSCH, and the first transmission resource for the SPS PDSCH is pre-configured to occupy $N_{symb}^{sh}$ (i.e., $N1 = N_{symb}^{sh}$) time-domain symbols and occupy $n_{PRB}$ (i.e., $N2 = n_{PRB}$) PRBs. The $N_{symb}^{sh}$ time-domain symbols include M1 uplink symbols, resources corresponding to the M1 uplink symbols are the second part of resources, and resources in the first transmission resource other than the second part of resources are the first part of resources. The first device determines the number of resources (i.e., the number of REs) of the first part of resources through following step 1 and step 2.

In step 1, the number of REs corresponding to one PRB in the first part of resources is determined as:

$$N'_{RE} = N_{sc}^{RB} \cdot \left( N_{symb}^{sh} \text{-M1} \right) - N_{DMRS}^{PRB} - N_{oh}^{PRB} \ ,$$

where, $N_{sc}^{RB} = 12$, representing the number of subcarriers corresponding to one RB; $N_{DMRS}^{PRB}$ represents the number of REs included in the demodulation reference signal; $N_{oh}^{PRB}$ is a parameter configured through high-level signaling and has a value of 6, 12, or 18 (if this parameter is not configured in the high-level signaling, it is set to be 0).

In step 2, the number of REs of the first part of resources is determined as:

$$N_{RE} = \min\left( 156, N'_{RE} \right) \cdot n_{PRB} \ .$$

Scheme B)

In some implementations, the first device determines the number of resources of the first part of resources based on a number of time-domain symbols included in the first transmission resource, a number of PRBs included in the first transmission resource, and a number of PRBs included in the second part of resources.

Specifically, the first device determines a number of REs corresponding to one PRB in the first transmission resource based on the number of the time-domain symbols included in the first transmission resource; and the first device determines a number of REs of the first part of resources based on the number of the PRBs included in the first transmission resource, the number of the PRBs included in the second part of resources, and the number of the REs corresponding to one PRB in the first transmission resource.

In one example, as shown in FIG. 6, the first channel is SPS PDSCH, and the first transmission resource for the SPS PDSCH is pre-configured to occupy $N_{symb}^{sh}$ (i.e., $N1 = N_{symb}^{sh}$) time-domain symbols and occupy $n_{PRB}$ (i.e., N2 = $n_{PRB}$) PRBs. M2 PRBs among the $n_{PRB}$ PRBs are uplink PRBs and gap PRBs, resources corresponding to the M2 PRBs are the second part of resources, and resources in the first transmission resource other than the second part of resources are the first part of resources. The first device determines the number of resources (i.e., the number of REs) of the first part of resources through following step 1 and step 2.

In step 1, the number of REs corresponding to one PRB in the first transmission resource is determined as:

$$N'_{RE} = N_{sc}^{RB} \cdot N_{symb}^{sh} - N_{DMRS}^{PRB} - N_{oh}^{PRB} \ ,$$

where, $N_{sc}^{RB} = 12$, representing the number of subcarriers corresponding to one RB; $N_{DMRS}^{PRB}$ represents the number of REs included in the demodulation reference signal; $N_{oh}^{PRB}$ is a parameter configured through high-level signaling and has a value of 6, 12, or 18 (if this parameter is not configured in the high-level signaling, it is set to be 0).

In step 2, the number of REs of the first part of resources is determined as:

$$N_{RE} = \min\left( 156, N'_{RE} \right) \cdot \left( n_{PRB} - M2 \right) \ .$$

Scheme C)

In some implementations, the first device determines the number of resources of the first part of resources based on a number of time-domain symbols included in the first transmission resource, a number of PRBs included in the first transmission resource, a number of time-domain symbols included in the second part of resources, and a number of PRBs included in the second part of resources.

Specifically, the first device determines a number of REs corresponding to one PRB in the first part of resources based on the number of the time-domain symbols included in the first transmission resource and the number of the time-domain symbols included in the second part of resources; and the first device determines a number of REs of the first part of resources based on the number of the PRBs included in the first transmission resource, the number of the PRBs included in the second part of resources, and the number of the REs corresponding to one PRB in the first part of resources.

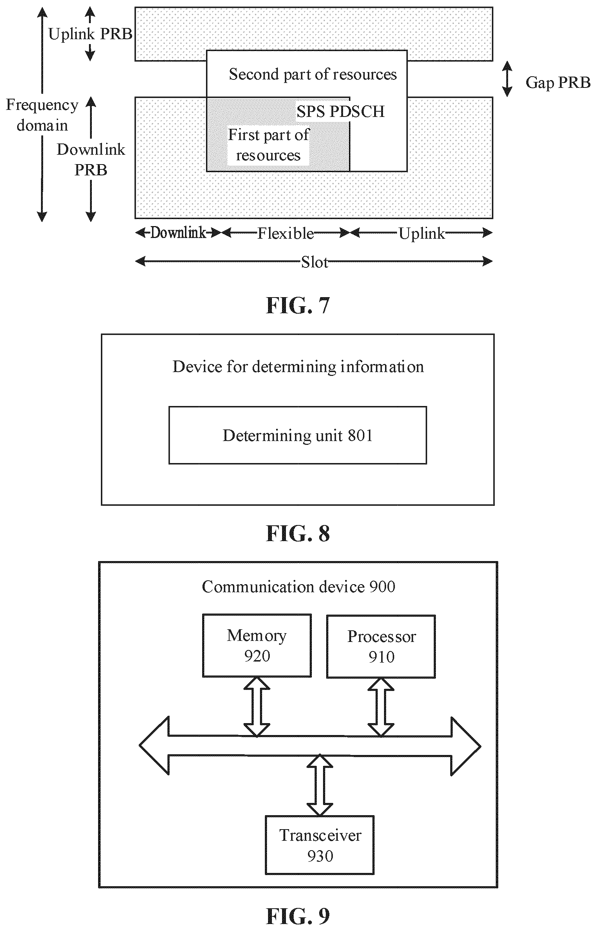

In an example, as shown in FIG. 7, the first channel is SPS PDSCH, and the first transmission resource for the SPS PDSCH is pre-configured to occupy $N_{symb}^{sh}$ (i.e., $N1 = N_{symb}^{sh}$) time-domain symbols and occupy $n_{PRB}$ (i.e., N2 = $n_{PRB}$) PRBs. The $N_{symb}^{sh}$ time-domain symbols include M1 uplink symbols, M2 PRBs among the $n_{PRB}$ PRBs are uplink PRBs and gap PRBs, resources corresponding to the M1 uplink symbols and resources corresponding to the M2 PRBs are the second part of resources, and resources in the first transmission resource other than the second part of resources are the first part of resources. The first device determines the number of resources (i.e., the number of REs) of the first part of resources through following step 1 and step 2.

In step 1, the number of REs corresponding to one PRB in the first part of resources is determined as:

$$N_{RE}^{'} = N_{sc}^{RB} \cdot \left( N_{symb}^{sh}\text{-M1} \right) - N_{DMRS}^{PRB} - N_{oh}^{PRB} \, ,$$

where, $N_{sc}^{RB} = 12$ representing the number of subcarriers corresponding to one RB; $N_{DMRS}^{PRB}$ represents the number of REs included in the demodulation reference signal; $N_{oh}^{PRB}$ is a parameter configured through high-level signaling and has a value of 6, 12, or 18 (if this parameter is not configured in the high-level signaling, this parameter is set to be 0).

In step 2, the number of REs of the first part of resources is determined as:

$$N_{RE} = \min \left( 156, N_{RE}^{'} \right) \cdot \left( n_{PRB} - \text{M2} \right).$$

The second scheme

In the embodiment of the present disclosure, the first transmission resource includes a number of N1 time-domain symbols and a number of N2 PRBs, and the second part of resources includes a number of M3 REs.

In some implementations, the first device determines the number of resources of the first part of resources based on a number of time-domain symbols included in the first transmission resource, a number of PRBs included in the first transmission resource, and a number of REs included in the second part of resources.

Specifically, the first device determines a number of REs corresponding to one PRB in the first transmission resource based on the number of the time-domain symbols included in the first transmission resource; and the first device determines a number of REs of the first part of resources based on the number of the PRBs included in the first transmission resource, the number of the REs included in the second part of resources, and the number of the REs corresponding to one PRB in the first transmission resource.

In an example, the first channel is SPS PDSCH, and the first transmission resource for the SPS PDSCH is pre-configured to occupy $N_{symb}^{sh}$ (i.e., $N1 = N_{symb}^{sh}$) time-domain symbols and occupy $n_{PRB}$ (i.e., N2 = $n_{PRB}$) PRBs. The M3 REs in the first transmission resource are unavailable REs, i.e., the M3 REs are the second part of resources, and resources in the first transmission resource other than the second part of resources are the first part of resources. The first device determines the number of resources (i.e., the number of REs) of the first part of resources through following step 1 and step 2.

In step 1, the number of REs corresponding to one PRB in the first transmission resource is determined as:

$$N_{RE}^{'} = N_{sc}^{RB} \cdot N_{symb}^{sh} - N_{DMRS}^{PRB} - N_{oh}^{PRB} \, ,$$

where, $N_{sc}^{RB} = 12$, representing the number of subcarriers corresponding to one RB; $N_{DMRS}^{PRB}$ represents the number of REs included in the demodulation reference signal; $N_{oh}^{PRB}$ is a parameter configured through high-level signaling and has a value of 6, 12, or 18 (if this parameter is not configured in the high-level signaling, it is set to be 0).

In step 2, the number of REs of the first part of resources is determined as:

$$N_{RE} = \min \left( 156, N_{RE}^{'} - \text{M3} \right) \cdot n_{PRB} \, .$$

**EP 4 586 714 A1**

In the embodiment of the present disclosure, after the first device determines the number of resources of the first part of resources through the above schemes, the first device determines the TBS corresponding to the first channel based on the number of resources of the first part of resources. Specifically, the first device determines the TBS corresponding to the first channel based on the number of resources of the first part of resources and at least one parameter, where the at least one parameter includes at least one of: a coding rate, a modulation order, or a number of transport layers.

Specifically, the first device calculates $N_{info} = N_{RE} \cdot R \cdot Q_m \cdot \upsilon$, and determines TBS according to $N_{info}$. Herein, $N_{RE}$ represents the number of resources of the first part of resources (i.e., the number of REs); R represents the coding rate, $Q_m$ represents the modulation order, and $\upsilon$ represents the number of transport layers. Herein, the determination of the TBS according to $N_{info}$ may be implemented through foregoing related description.

After the TBS corresponding to the first channel is determined through the above schemes, the first device may perform transmission-related processing on the first channel (where the first device is a transmitter) or reception-related processing on the first channel (where the first device is a receiver) according to the TBS corresponding to the first channel. Herein, the transmission-related processing may be, but is not limited to, encoding processing, and the reception-related processing may be, but is not limited to, decoding processing.

According to the technical solutions of the embodiments of the present disclosure, for the first channel that is semi-statically configured, if there are unavailable resources in the transmission resources for the first channel, the TBS corresponding to the first channel is determined according to the number of resources of actual available resources. In this way, the determined TBS may accurately reflect the number of resources of actual available resources for the first channel, and the effective transmission of the first channel can be guaranteed according to the TBS without abandoning the transmission of the first channel. In addition, it is not necessary to configure small-capacity transmission resources for the first channel to accommodate individual periods where the small-capacity transmission resources are required to be used, and even if the large-capacity transmission resources are configured for the first channel, the TBS corresponding to the first channel may be determined according to the number of resources of the actual available resources, thereby ensuring the semi-static transmission of the first channel greatly, and improving system efficiency.

Preferred embodiments of the present disclosure have been described in detail with reference to the accompanying drawings, but the present disclosure is not limited to the specific details of the above embodiments. Within the scope of the technical conception of the present disclosure, various simple modifications may be made to the technical schemes of the present disclosure, and these simple modifications all fall within the scope of protection of the present disclosure. For example, each of the specific technical features described in the above specific embodiments may be combined in any suitable manner without contradiction, and various possible combinations are not further described in this disclosure in order to avoid unnecessary repetition. For another example, any combination may be made between the various embodiments of the present disclosure so long as it does not depart from the idea of the present disclosure and is also to be regarded as the present disclosure of the present disclosure. For another example, on the premise of no conflict, each embodiment described in the present disclosure and/or the technical features in each embodiment may be arbitrarily combined with the prior art, and the technical schemes obtained after the combination should also fall within the scope of protection of the present disclosure.

It is to be understood that, in various embodiments of the present disclosure, the sequence numbers of the above processes do not imply the sequence of execution, and the sequence of execution of each process should be determined according to its functions and internal logic, and should not constitute any limitation on the implementation process of the embodiments of the present disclosure. Furthermore, in embodiments of the present disclosure, the terms "downlink", "uplink" and "sidelink" are used to represent the transmission direction of the signal or data, where the term "downlink" is used to represent a transmission direction of the signal or data as a first direction transmitted from a site to the user equipment of the cell, the term "uplink" is used to represent a transmission direction of the signal or data as a second direction transmitted from the user equipment of the cell to the site, and the term "sidelink" is used to represent a transmission direction of the signal or data as a first direction transmitted from the user equipment 1 to the user equipment 2. For example, a term "downlink signal" means that the transmission direction of the signal is a first direction. In addition, in embodiments of the present disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the associated objects is "or".

FIG. 8 is a schematic structural diagram of a device for determining information according to an embodiment of the present disclosure. The device for determining information is applied to the first device. As shown in FIG. 8, the device for determining information includes a determining unit 801.

The determining unit 801 is configured to determine a TBS corresponding to a first channel based on a number of resources of a first part of resources.

Herein, a transmission resource for transmitting the first channel is pre-configured as a first transmission resource, the first transmission resource includes the first part of resources and a second part of resources, and the second part of resources is not used for transmitting the first channel.

In some implementations, the first part of resources are contiguous resources or non-contiguous resources, and the determining unit 801 is configured to determine the TBS corresponding to the first channel based on a number of resources of all resources of the first part of resources.

In some implementations, the first part of resources includes multiple non-contiguous groups of resources, and resources within each group of resources are contiguous. The determining unit 801 is configured to determine the TBS corresponding to the first channel based on a number of resources of one group of resources among the multiple groups of resources.

In some implementations, the one group of resources among the multiple groups of resources is a group of resources having a largest number of resources among the multiple groups of resources, or the one group of resources among the multiple groups of resources is a group of resources having a smallest resource numbering among the multiple groups of resources, or the one group of resources among the multiple groups of resources is a group of resources having a largest resource numbering among the multiple groups of resources, or the one group of resources among the multiple groups of resources is a temporally earliest group of resources among the multiple groups of resources, or the one group of resources among the multiple groups of resources is a temporally latest group of resources among the multiple groups of resources.

In some implementations, the first channel is a downlink channel, and the second part of resources includes at least one of: an uplink transmission resource, a guard gap-occupied resource, a control resource set-occupied resource, a synchronization signal-occupied resource, a broadcast channel-occupied resource, and a first pre-configured resource. The first pre-configured resource is a pre-configured resource that cannot be occupied by the downlink channel.

In some implementations, the first channel is an SPS PDSCH.

In some implementations, the first channel is an uplink channel, and the second part of resources includes at least one of: a downlink transmission resource, a guard gap-occupied resource, a control resource set-occupied resource, a synchronization signal-occupied resource, a broadcast channel-occupied resource, and a second pre-configured resource. The second pre-configured resource is a pre-configured resource that cannot be occupied by the uplink channel.

In some implementations, the first channel is a CG PUSCH.

In some implementations, the first transmission resource includes a number of N1 time-domain symbols and a number of N2 Physical Resource Blocks (PRBs), and the second part of resources includes a number of M1 time-domain symbols among the N1 time-domain symbols and a number of M2 PRBs among the N2 PRBs, where N1 and N2 are positive integers.

Herein, M1 is a positive integer less than N1, and M2 is a positive integer less than or equal to N2; or M1 is a positive integer less than or equal to N1, and M2 is a positive integer less than N2.

In some implementations, the determining unit 801 is configured to determine the number of resources of the first part of resources based on a number of time-domain symbols included in the first transmission resource, a number of PRBs included in the first transmission resource, and a number of time-domain symbols included in the second part of resources.

In some implementations, the determining unit 801 is configured to: determine a number of REs corresponding to one PRB in the first part of resources based on the number of the time-domain symbols in the first transmission resource and the number of the time-domain symbols in the second part of resources; and determine a number of REs of the first part of resources based on the number of the PRBs in the first transmission resource and the number of the REs corresponding to one PRB in the first part of resources.

In some implementations, the determining unit 801 is configured to determine the number of resources of the first part of resources based on a number of time-domain symbols included in the first transmission resource, a number of PRBs included in the first transmission resource, and a number of PRBs included in the second part of resources.

In some implementations, the determining unit 801 is configured to: determine a number of REs corresponding to one PRB in the first transmission resource based on the number of the time-domain symbols included in the first transmission resource; and determine a number of REs of the first part of resources based on the number of the PRBs included in the first transmission resource, the number of the PRBs included in the second part of resources, and the number of the REs corresponding to one PRB in the first transmission resource.

In some implementations, the determining unit 801 is configured to determine the number of resources of the first part of resources based on a number of time-domain symbols included in the first transmission resource, a number of PRBs included in the first transmission resource, a number of time-domain symbols included in the second part of resources, and a number of PRBs included in the second part of resources.

In some implementations, the determining unit 801 is configured to: determine a number of REs corresponding to one PRB in the first part of resources based on the number of the time-domain symbols included in the first transmission resource and the number of the time-domain symbols included in the second part of resources; and determine a number of REs of the first part of resources based on the number of the PRBs included in the first transmission resource, the number of the PRBs included in the second part of resources, and the number of the REs corresponding to one PRB in the first part of resources.

In some implementations, the first transmission resource includes a number of N1 time-domain symbols and a number of N2 PRBs, and the second part of resources includes a number of M3 REs.

In some implementations, the determining unit 801 is configured to determine the number of resources of the first part of resources based on a number of time-domain symbols included in the first transmission resource, a number of PRBs included in the first transmission resource, and a number of REs included in the second part of resources.

In some implementations, the determining unit 801 is configured to: determine a number of REs corresponding to one PRB in the first transmission resource based on the number of the time-domain symbols included in the first transmission resource; and determine a number of REs of the first part of resources based on the number of the PRBs included in the first transmission resource, the number of the REs included in the second part of resources, and the number of the REs corresponding to one PRB in the first transmission resource.

In some implementations, the determining unit 801 is configured to determine the TBS corresponding to the first channel based on the number of resources of the first part of resources and at least one parameter, where the at least one parameter includes at least one of: a coding rate, a modulation order, or a number of transport layers.

Those skilled in the art will appreciate that the above-described description of the device for determining information in the embodiments of the present disclosure may be understood with reference to the description of the method for determining information in the embodiments of the present disclosure.

FIG. 9 is a schematic structural diagram of a communication device 900 according to an embodiment of the present disclosure. The communication device 900 shown in FIG. 9 includes a processor 910. The processor 910 may invoke and execute a computer program from a memory to implement the method in the embodiments of the present disclosure.

Optionally, as shown in FIG. 9, the communication device 900 may further include a memory 920. The processor 910 may invoke and execute a computer program from the memory 920 to implement the method in the embodiment of the present disclosure.

The memory 920 may be a separate device independent of the processor 910 or may be integrated into the processor 910.

Optionally, as shown in FIG. 9, the communication device 900 may further include a transceiver 930. The processor 910 may control the transceiver 930 to communicate with other devices, in particular, to send information or data to other devices, or receive information or data sent by other devices.

Herein, the transceiver 930 may include a transmitter and a receiver. The transceiver 930 may further include an antenna(s), the number of which may be one or more.

The communication device 900 may specifically be the first device in the embodiment of the present disclosure, and the communication device 900 may implement process implemented by the first device in each method of the embodiments of the present disclosure, which will not be elaborated herein for simplicity.

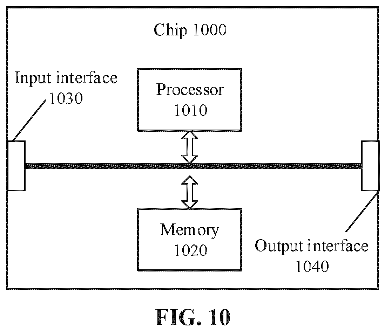

FIG. 10 is a schematic structural diagram of a chip according to an embodiment of the present disclosure. The chip 1000 shown in FIG. 10 includes a processor 1010 that may invoke and execute a computer program from a memory to implement the method in the embodiments of the present disclosure.

Optionally, as shown in FIG. 10, the chip 1000 may further include a memory 1020. The processor 1010 may invoke and execute a computer program from the memory 1020 to implement the methods in the embodiment of the present disclosure.

The memory 1020 may be a separate device independent of the processor 1010 or may be integrated into the processor 1010.

Optionally, the chip 1000 may further include an input interface 1030. The processor 1010 may control the input interface 1030 to communicate with other devices or chips, and in particular may obtain information or data sent by other devices or chips.

Optionally, the chip 1000 may further include an output interface 1040. The processor 1010 may control the output interface 1040 to communicate with other devices or chips, and in particular may output information or data to other devices or chips.

The chip may be applied to the first device in the embodiments of the present disclosure, and the chip may implement the corresponding flows implemented by the first device in each method of the embodiment of the disclosure, which will not be elaborated herein for simplicity

It is to be understood that chip mentioned in the embodiments of the present disclosure may also be referred to as a system level chip, a system chip, a chip system or an on-chip system chip, etc.

It is to be understood that the processor of the embodiments of the disclosure may be an integrated circuit chip with signal processing capabilities. In an implementation process, various steps of the above method embodiments may be completed by integrated logic circuits of hardware in the processor or instructions in the form of software. The above processor may be a general-purpose processor, a Digital Signal Processor (DSP), an Application Specific Integrated Circuit (ASIC), a Field Programmable Gate Array (FPGA), or other programmable logic devices, discrete gate or transistor logic devices, and discrete hardware components. Various methods, steps, and logical block diagrams disclosed in the embodiments of the disclosure may be implemented or performed. The general-purpose processor may be a microprocessor, any conventional processor, or the like. Steps or operations of the methods disclosed with reference to the embodiments of the disclosure may be directly performed and accomplished by a hardware decoding processor, or may be performed and accomplished by a combination of hardware and software modules in the decoding processor. The software module may be located in a storage medium mature in the art, such as a random access memory, a flash memory, a read-only memory, a programmable read-only memory or electrically erasable programmable memory, or a register. The storage medium is located in the memory, and the processor reads information in the memory and completes the steps or operations in the foregoing methods in combination with hardware of the processor.

It may be understood that the memory in the embodiments of the disclosure may be a volatile memory or a nonvolatile memory, or may include a volatile memory and a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, which is used as an external high-speed cache. By way of example but not restrictive description, many forms of RAMs may be used, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It is to be noted that the memory of the systems and methods described in this specification includes, but is not limited to, these and any other proper types of memories.

It is to be understood that the abovementioned memories are exemplary but not restrictive, for example, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM). That is to say, the memories described in the embodiment of the disclosure are intended to include, but not limited to, these and any other suitable types of memories.

The embodiments of the disclosure further provide a computer readable storage medium configured to store a computer program. The computer readable storage medium may be applied to the first device in the embodiments of the disclosure. The computer program enables a computer to execute corresponding flows implemented by the first device in each method of the embodiment of the disclosure, which will not be elaborated here for simplicity

The embodiments of the disclosure further provide a computer program product, which includes computer program instructions. The computer program product may be applied to the first device in the embodiments of the disclosure. The computer program instructions enable a computer to execute corresponding flows implemented by the first device in each method of the embodiment of the disclosure, which will not be elaborated here for simplicity.

The embodiments of the disclosure further provide a computer program. The computer program may be applied to the first device in the embodiments of the disclosure. The computer program runs in a computer to enable the computer to execute corresponding flows implemented by the first device in each method of the embodiment of the disclosure, which will not be elaborated herein for simplicity.

Those of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on particular applications and design constraints of the technical schemes. A person skilled in the art may realize the described functions for each particular disclosure by different methods, but it is not considered that the implementation is beyond the scope of the disclosure.

It may be clearly understood by a person skilled in the art that, for the purpose of convenient and brief description, for a detailed working process of the foregoing system, apparatus, and unit, reference may be made to a corresponding process in the foregoing method embodiments, and details are not described again herein.

In the several embodiments provided in the disclosure, it is to be understood that the disclosed system, apparatus, and method may be implemented in other modes. For example, the apparatus embodiment described above is only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the schemes of the embodiments.

In addition, functional units in various embodiments of the disclosure may be integrated into one processing unit, or each of the units may be physically separated, or two or more units may be integrated into one unit.

When the functions are realized in a form of a software functional unit and sold or used as an independent product, they may be stored in a computer-readable storage medium. In view of this understanding, the technical schemes of the embodiments of the disclosure essentially or the parts that contribute to the prior art, or part of the technical schemes can be embodied in the form of a software product. The computer software product is stored in a storage medium, including multiple instructions for causing a computer device (which may be a personal computer, a server, or a network device, and the like) to execute all or part of the steps of the method described in the embodiments of the disclosure. The foregoing storage medium includes a USB flash disk, a mobile hard disk drive, an ROM, an RAM, and various media that can store program codes, such as a magnetic disk or an optical disk.

The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

**Claims**

1. A method for determining information, comprising:

   determining, by a first device, a Transport Block Size (TBS) corresponding to a first channel based on a number of resources of a first part of resources,
   wherein a transmission resource for transmitting the first channel is pre-configured as a first transmission resource, the first transmission resource comprises the first part of resources and a second part of resources, and the second part of resources is not used for transmitting the first channel.

2. The method of claim 1, wherein the first part of resources are contiguous resources or non-contiguous resources; and determining, by the first device, the TBS corresponding to the first channel based on the number of resources of the first part of resources comprises:
   determining, by the first device, the TBS corresponding to the first channel based on a number of resources of all resources of the first part of resources.

3. The method of claim 1, wherein the first part of resources comprises a plurality of non-contiguous groups of resources, and resources within each group of resources are contiguous,
   wherein determining, by the first device, the TBS corresponding to the first channel based on the number of resources of the first part of resources comprises:
   determining, by the first device, the TBS corresponding to the first channel based on a number of resources of one group of resources among the plurality of groups of resources.

4. The method of claim 3, wherein

   the one group of resources among the plurality of groups of resources is a group of resources having a largest number of resources among the plurality of groups of resources, or
   the one group of resources among the plurality of groups of resources is a group of resources having a smallest resource numbering among the plurality of groups of resources, or
   the one group of resources among the plurality of groups of resources is a group of resources having a largest resource numbering among the plurality of groups of resources, or
   the one group of resources among the plurality of groups of resources is a temporally earliest group of resources among the plurality of groups of resources.

5. The method of any one of claims 1 to 4, wherein the first channel is a downlink channel, and the second part of resources comprises at least one of: an uplink transmission resource, a guard gap-occupied resource, a control resource set-occupied resource, a synchronization signal-occupied resource, a broadcast channel-occupied resource, and a first pre-configured resource, the first pre-configured resource being a pre-configured resource that cannot be occupied by the downlink channel.

6. The method of claim 5, wherein the first channel is a Semi-Persistent Scheduling (SPS) Physical Downlink Shared Channel (PDSCH).

7. The method of any one of claims 1 to 4, wherein the first channel is an uplink channel, and the second part of resources comprises at least one of: a downlink transmission resource, a guard gap-occupied resource, a control resource set-occupied resource, a synchronization signal-occupied resource, a broadcast channel-occupied resource, and a second pre-configured resource, the second pre-configured resource being a pre-configured resource that cannot be occupied by the uplink channel.

8.  The method of claim 7, wherein the first channel is a Configured Grant (CG) Physical Uplink Shared Channel (PUSCH).

9.  The method of any one of claims 1 to 8, wherein the first transmission resource comprises a number of N1 time-domain symbols and a number of N2 Physical Resource Blocks (PRBs), and the second part of resources comprises a number of M1 time-domain symbols among the N1 time-domain symbols and a number of M2 PRBs among the N2 PRBs, where N1 and N2 are positive integers,
    wherein M1 is a positive integer less than N1, and M2 is a positive integer less than or equal to N2; or M1 is a positive integer less than or equal to N1, and M2 is a positive integer less than N2.

10. The method of any one of claims 1 to 9, further comprising:
    determining, by the first device, the number of resources of the first part of resources based on a number of time-domain symbols comprised in the first transmission resource, a number of PRBs comprised in the first transmission resource, and a number of time-domain symbols comprised in the second part of resources.

11. The method of claim 10, wherein determining, by the first device, the number of resources of the first part of resources based on the number of the time-domain symbols comprised in the first transmission resource, the number of the PRBs comprised in the first transmission resource, and the number of the time-domain symbols comprised in the second part of resources comprises:

    determining, by the first device, a number of Resource Elements (REs) corresponding to one PRB in the first part of resources based on the number of the time-domain symbols comprised in the first transmission resource and the number of the time-domain symbols comprised in the second part of resources; and
    determining, by the first device, a number of REs of the first part of resources based on the number of the PRBs comprised in the first transmission resource and the number of the REs corresponding to one PRB in the first part of resources.

12. The method of any one of claims 1 to 9, further comprising:
    determining, by the first device, the number of resources of the first part of resources based on a number of time-domain symbols comprised in the first transmission resource, a number of PRBs comprised in the first transmission resource, and a number of PRBs comprised in the second part of resources.

13. The method of claim 12, wherein determining, by the first device, the number of resources of the first part of resources based on the number of the time-domain symbols comprised in the first transmission resource, the number of the PRBs comprised in the first transmission resource, and the number of the PRBs comprised in the second part of resources comprises:

    determining, by the first device, a number of REs corresponding to one PRB in the first transmission resource based on the number of the time-domain symbols comprised in the first transmission resource; and
    determining, by the first device, a number of REs of the first part of resources based on the number of the PRBs comprised in the first transmission resource, the number of the PRBs comprised in the second part of resources, and the number of the REs corresponding to one PRB in the first transmission resource.

14. The method of any one of claims 1 to 9, further comprising:
    determining, by the first device, the number of resources of the first part of resources based on a number of time-domain symbols comprised in the first transmission resource, a number of PRBs comprised in the first transmission resource, a number of time-domain symbols comprised in the second part of resources, and a number of PRBs comprised in the second part of resources.

15. The method of claim 14, wherein determining, by the first device, the number of resources of the first part of resources based on the number of the time-domain symbols comprised in the first transmission resource, the number of the PRBs comprised in the first transmission resource, the number of the time-domain symbols comprised in the second part of resources, and the number of the PRBs comprised in the second part of resources comprises:

determining, by the first device, a number of REs corresponding to one PRB in the first part of resources based on the number of the time-domain symbols comprised in the first transmission resource and the number of the time-domain symbols comprised in the second part of resources; and

determining, by the first device, a number of REs of the first part of resources based on the number of the PRBs comprised in the first transmission resource, the number of the PRBs comprised in the second part of resources, and the number of the REs corresponding to one PRB in the first part of resources.

16. The method of any one of claims 1 to 8, wherein the first transmission resource comprises a number of N1 time-domain symbols and a number of N2 PRBs, and the second part of resources comprises a number of M3 REs.

17. The method of any one of claims 1 to 8 and 16, further comprising:
determining, by the first device, the number of resources of the first part of resources based on a number of time-domain symbols comprised in the first transmission resource, a number of PRBs comprised in the first transmission resource, and a number of REs comprised in the second part of resources.

18. The method of claim 17, wherein determining, by the first device, the number of resources of the first part of resources based on the number of the time-domain symbols comprised in the first transmission resource, the number of the PRBs comprised in the first transmission resource, and the number of the REs comprised in the second part of resources comprises:

determining, by the first device, a number of REs corresponding to one PRB in the first transmission resource based on the number of the time-domain symbols comprised in the first transmission resource; and

determining, by the first device, a number of REs of the first part of resources based on the number of the PRBs comprised in the first transmission resource, the number of the REs comprised in the second part of resources, and the number of the REs corresponding to one PRB in the first transmission resource.

19. The method of any one of claims 1 to 18, wherein determining, by the first device, the TBS corresponding to the first channel based on the number of resources of the first part of resources comprises:
determining, by the first device, the TBS corresponding to the first channel based on the number of resources of the first part of resources and at least one parameter, wherein the at least one parameter comprises at least one of: a coding rate, a modulation order, or a number of transport layers.

20. A device for determining information, applied to a first device, the device comprising:

a determining unit, configured to determine a Transport Block Size (TBS) corresponding to a first channel based on a number of resources of a first part of resources,
wherein a transmission resource for transmitting the first channel is pre-configured as a first transmission resource, the first transmission resource comprises the first part of resources and a second part of resources, and the second part of resources is not used for transmitting the first channel.

21. A communication device comprising: a processor and a memory, wherein the memory is configured to store a computer program, and the processor is configured to invoke and execute the computer program stored in the memory to perform the method of any one of claims 1 to 19.

22. A chip comprising: a processor configured to invoke and execute a computer program from a memory, to enable a device on which the chip is mounted to perform the method of any one of claims 1 to 19.

23. A computer readable storage medium configured to store a computer program that causes a computer to perform the method of any one of claims 1 to 19.

24. A computer program product comprising computer program instructions that cause a computer to perform the method of any one of claims 1 to 19.

25. A computer program that causes a computer to perform the method of any one of claims 1 to 19.

EP 4 586 714 A1

**FIG. 1**

**FIG. 2**

| | 0 | 1 | 2 | 3 | 4 | 5 | 6 | 7 | 8 | 9 | 0 | 1 | 2 | 3 | 4 | 5 | 6 | 7 | 8 | 9 | |
|---|---|---|---|---|---|---|---|---|---|---|---|---|---|---|---|---|---|---|---|---|---|
| | D | D | D | F | U | D | D | D | F | U | D | D | D | F | U | D | D | D | F | U | |
| Configuration 1 | 1 | | | | | | | | | | | | | | | | | 2 | | | 17 |
| | | | | | | | | | | | | | | 3 | | | | | | | 17 |
| | | | | | | | | | 4 | | | | | | | | | | | | 16 |
| Configuration 2 | 1 | | | | | | | | | | | | | | | | | | 2 | | 17 |
| | | | | | | | | | | | | | | | 3 | | | | | | 17 |
| | | | | | | | | | | 4 | | | | | | | | | | | 16 |
| Configuration 3 | | | 1 | | | | | | | | | | | | | | | 3 | | | 17 |
| | | | | | | | | | | | | | | | | | | | 2 | | 17 |
| | | | | | | | | | | | 4 | | | | | | | | | | 16 |
| Configuration 4 | | | | 1 | | | | | | | | | | | | | 3 | | | | 17 |
| | 2 | | | | | | | | | | | | | | | | | | | | 17 |
| | | | | | | | | | | | | 4 | | | | | | | | | 16 |
| Configuration 5 | | | | | 1 | | | | | | | | | | | | | | | | 17 |
| | | 2 | | | | | | | | | | | | | | | | 3 | | | 17 |
| | | | | | | | | | | | | | | 4 | | | | | | | 16 |

**FIG. 3**

A first device determines a TBS corresponding to a first channel based on a number of resources of a first part of resources, where a transmission resource for transmitting the first channel is pre-configured as a first transmission resource, the first transmission resource includes the first part of resources and a second part of resources, and the second part of resources is not used for transmitting the first channel — 401

**FIG. 4**

**FIG. 5**

**FIG. 6**

Uplink PRB

Frequency domain

Downlink PRB

Second part of resources

SPS PDSCH

First part of resources

Gap PRB

←Downlink→ ←Flexible→ ←Uplink→

←Slot→

**FIG. 7**

Device for determining information

Determining unit 801

**FIG. 8**

Communication device 900

Memory 920

Processor 910

Transceiver 930

**FIG. 9**

FIG. 10

## INTERNATIONAL SEARCH REPORT

| | International application No. |
|---|---|
| | **PCT/CN2022/112067** |

| A. | CLASSIFICATION OF SUBJECT MATTER |
|---|---|

H04W 72/04(2023.01)i

According to International Patent Classification (IPC) or to both national classification and IPC

| B. | FIELDS SEARCHED |
|---|---|

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

EPODOC, WPI, CNPAT, CNKI, 3GPP: 传输块, 大小, 尺寸, 确定, 计算, 不可用, 排除, 不包括, TBS, size, transport, block, exclude, RE, PRB, determine, calculate

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021062613 A1 (GUANGDONG OPPO MOBILE TELECOMMUNICATIONS CORP., LTD. et al.) 08 April 2021 (2021-04-08)<br>description, page 4, line 27 to page 8, line 15, claims 1-5, and figures 3-5 | 1-25 |
| X | CN 104885543 A (LG ELECTRONICS INC.) 02 September 2015 (2015-09-02)<br>description, paragraphs [0214]-[0250], and claims 1-6 | 1-25 |
| X | CN 112655264 A (BEIJING XIAOMI MOBILE SOFTWARE CO., LTD.) 13 April 2021 (2021-04-13)<br>description, paragraphs [0052]-[0082], and claims 1-7 | 1-25 |
| X | US 2021258827 A1 (QUALCOMM INC.) 19 August 2021 (2021-08-19)<br>description, paragraphs [0068]-[0098] | 1-25 |
| A | SPREADTRUM COMMUNICATIONS. "R1-1800276 TBS Calculation for Small Packet Sizes"<br>*3GPP TSG RAN WG1 Meeting AH 1801*, 12 January 2018 (2018-01-12),<br>entire document | 1-25 |
| A | CN 113678389 A (HUAWEI TECHNOLOGIES CO., LTD.) 19 November 2021 (2021-11-19)<br>entire document | 1-25 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 January 2023** | **18 January 2023** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/112067**

| Patent document cited in search report | | | Publication date (day/month/year) | Patent family member(s) | | | Publication date (day/month/year) |
|---|---|---|---|---|---|---|---|
| WO | 2021062613 | A1 | 08 April 2021 | EP | 4013161 | A1 | 15 June 2022 |
| | | | | WO | 2021063002 | A1 | 08 April 2021 |
| | | | | JP | 2022549595 | A | 28 November 2022 |
| | | | | KR | 20220071963 | A | 31 May 2022 |
| | | | | WO | 2021062972 | A1 | 08 April 2021 |
| | | | | US | 2022190983 | A1 | 16 June 2022 |
| | | | | CN | 113994749 | A | 28 January 2022 |
| | | | | CN | 114466461 | A | 10 May 2022 |
| | | | | BR | 112022005613 | A2 | 19 July 2022 |
| | | | | WO | 2021062978 | A1 | 08 April 2021 |
| CN | 104885543 | A | 02 September 2015 | US | 2015319776 | A1 | 05 November 2015 |
| | | | | WO | 2014088294 | A1 | 12 June 2014 |
| CN | 112655264 | A | 13 April 2021 | WO | 2022126342 | A1 | 23 June 2022 |
| US | 2021258827 | A1 | 19 August 2021 | CN | 115066857 | A | 16 September 2022 |
| | | | | WO | 2021162848 | A1 | 19 August 2021 |
| CN | 113678389 | A | 19 November 2021 | WO | 2020199588 | A1 | 08 October 2020 |
| | | | | US | 2022021474 | A1 | 20 January 2022 |
| | | | | EP | 3952153 | A1 | 09 February 2022 |

Form PCT/ISA/210 (patent family annex) (January 2015)